# EUROPEAN PATENT SPECIFICATION

(11) **EP 1 403 312 B1**
(45) Date of publication and mention of the grant of the patent: **25.04.2012**
(21) Application number: 02733458.0
(22) Date of filing: 11.06.2002
(51) Int. Cl.: C08L 9/00, C08L 23/16, C08L 23/22, C08L 53/00, C08L 21/00, C08L 23/28, C08C 1/00

(54) **RUBBER COMPOSITION, CROSSLINKABLE RUBBER COMPOSITION AND CROSSLINKED ARTICLES**
KAUTSCHUKZUSAMMENSETZUNG, VERNETZBARE KAUTSCHUKZUSAMMENSETZUNG UND VERNETZE GEGENSTÄNDE
COMPOSITION DE CAOUTCHOUC, COMPOSITION DE CAOUTCHOUC RETICULABLE ET ARTICLES RETICULES

(30) Priority: 14.06.2001 JP 2001179998
(43) Date of publication of application: 31.03.2004
(73) Proprietor: KURARAY CO., LTD., Okayama 710-8622 (JP)
(72) Inventor: TAKAMATSU, Hideo c/o Kuraray Co., Ltd., Kashima-gun, Ibaraki 314-0197 (JP); MAEDA, Mizuho c/o Kuraray Co., Ltd., Kashima-gun, Ibaraki 314-0197 (JP); KITAYAMA, Koji c/o Kuraray Co., Ltd., Kashima-gun, Ibaraki 314-0197 (JP); YAMADA, Tsutomu c/o Kuraray Co., Ltd., Kashima-gun, Ibaraki 314-0197 (JP); KANBARA, Hiroshi c/o Kuraray Co., Ltd., Kashima-gun, Ibaraki 314-0197 (JP)
(74) Representative: Rocke, Carsten
(86) International application number: PCT/JP2002/005777
(87) International publication number: WO 2002/102889

(56) References cited:
- EP-A- 0 683 206
- JP-A- 8 109 288
- JP-A- 11 335 498
- US-A- 5 700 871
- US-B1- 6 184 307
- ZANZIG D J ET AL: "IBR BLOCK COPOLYMERS AS COMPATIBILIZERS IN NR/BR BLENDS" RUBBER CHEMISTRY AND TECHNOLOGY, RUBBER DIVISION ACS. AKRON, US, vol. 66, no. 4, 1 September 1993 (1993-09-01), pages 538-549, XP000411292 ISSN: 0035-9475

## Description

The present invention relates to novel rubber compositions, crosslinkable rubber compositions, and crosslinked products thereof (crosslinked articles) that are suitable for use in tires, various industrial articles, and other applications.

In the field of rubber industry, it is common practice to blend different types of rubber with each other to form a rubber composition, or to crosslink such a rubber composition to form a crosslinked rubber material, so that the resulting rubber will have desired properties required in a particular application. For example, nitrile rubber/polyvinyl chloride blends are known to have superior properties such as increased tensile strength and high oil resistance, as compared to materials formed of nitrile rubber alone. Also, polybutadiene rubber/syndiotactic 1,2-polybutadiene rubber blends are known to show increased tear strength and higher crack growth resistance, as compared to materials formed of polybutadiene rubber alone (See, for example, Journal of the Society of Rubber Industry Japan, 72 (1999): 593-598). Meanwhile, significant effort has been devoted to appling highly saturated rubber/diene rubber blends to, for example, side walls of tires. These rubber blends, however, have proven insufficient from the viewpoint of their crack growth resistance (See, for example, Journal of the Society of Rubber Industry Japan, 72 (1999): 552-557).

In this context, US-A-5,700,871 describes a compatibilized polymer blend composition which comprises a mixture of an elastomeric polymer and an acid-grafted polymer of an isomonoolefin and an alkylstyrene such as a blend of EPDM and a maleic anhydride-grafted copolymer of isobutylene para-methylstyrene.

Further, Zanzig, D. J. et al. (Rubber Chemistry and Technology 66(4), 1993, pp. 538 to 549) relates to IBR block copolymers as compatibilizers in NR/BR blends.

Furthermore, EP 0 683 206 A1 describes a thermoplastic polymer composition comprising 100 parts by weight of propylene, 5 to 100 parts by weight of a hydrogenated block copolymer which has at least one block A and at least one block B, or has at least on block A, at least one block B and at least one block C each indicated below, and which has a number average molecular weight of not higher than 700000, and the block C consists essentially of a polymer of isoprene and butadiene at a ratio by weight of 0:100 to 100:0 and has a number average molecular weight of not higher than 200000 and a vinyl bond content of not less than 40%, and 0 to 100 parts by weight of an ethylene/propylene rubber, wherein Block A is a butadiene polymer having a number average molecular weight of 2500 to 200000 and a vinyl bond content of not higher than 20%, Block B is a polymer of isoprene and butadiene at a ratio by weight of 30:70 to 100:0 and has a number average molecular weight of 30000 to 300000 and a vinyl bond content of not higher than 20%, and Block C is a polymer of isoprene and butadiene at a ratio by weight of 0:100 to 100:0 and has a number average molecular weight of not higher than 200000 and a vinyl bond content of not less than 40%.

Finally, US 6,184,307 B1 describes a method for producing butadiene-isoprene block copolymers with a specified amount of residual unsaturation in the polyisoprene blocks utilizing a hydrogenation catalyst, wherein the hydrogenation residence time is minimized.

In general, it is difficult to good mixing different types of rubbers in case of their poor compatibility relative to one another. For example, while diene rubbers such as natural rubber (NR), polyisoprene rubber (IR), polybutadiene rubber (BR) and styrene/butadiene copolymer rubber (SBR), contain large numbers of olefinic carbon-carbon double bonds (unsaturated bonds) in their primary structure, highly saturated rubbers such as ethylene/propylene copolymer rubber (EPR), ethylene/propylene/diene copolymer rubber (EPDM) and butyl rubber (IIR), contain, if any, very few unsaturated bonds. With different amounts of unsaturated bonds present in their primary structure, these rubbers are not compatible enough relative to one another.

For this reason, in forming a rubber composition by mixing different rubbers with different amounts of unsaturated bonds present in their primary structure, insufficient dispersion of the rubbers, as well as defective adhesion at the interface between the rubber phases, often results in the resultant rubber composition if the torque applied to knead the rubbers is too small or the time spent on kneading the rubbers is too short. As a result, the flexing property, the tensile property and other desired mechanical properties may be lost.

Accordingly, it is an objective of the present invention to provide a rubber composition, a crosslinkable rubber composition, and a crosslinked product thereof (a crosslinked article) that contain different types of rubbers, *i*.*e.*, a diene rubber and a highly saturated rubber, yet still exhibit improved tensile property and flexing property.

In an effort to find a way to achieve the above-described objective, the present inventors have discovered that, in producing a rubber composition by kneading a diene rubber with a highly saturated rubber, the compatibility between the two types of rubbers can be improved, as can the dispersibility of the two rubbers and the adhesion at the interface between the rubber phases, by adding a block copolymer comprising diene polymer blocks and hydrogenated diene polymer blocks, also having a specific primary structure. The rubber composition so obtained also proved to have an improved tensile property and flexing property. It was also discovered that a crosslinkable rubber composition obtained by further adding a crosslinking agent to the rubber composition also exhibits similar physical properties, and so does a crosslinked product (a crosslinked article) of the crosslinkable composition. These findings ultimately led the present inventors to devise the present invention.

Accordingly, the present invention comprises aspects of:
(I) a rubber composition comprising (1) a diene rubber which is an elastic polymer composed mainly of conjugated diene compounds, (2) a highly saturated rubber which is an elastic polymer that is composed mainly of olefin units, and in which the content of the olefinic carbon-carbon double bond units in the backbone of the polymer is 20% by mass or less, and (3) a block copolymer that comprises a diene polymer block A which is composed mainly of conjugated diene compounds and a hydrogenated diene polymer block B which is obtained through hydrogenation of a polymer block that consists mainly of conjugated diene compounds and has a primary structure selected from the following structures:
   (A-B)ₓ, (A-B)ₓ-A, and B-(A-B)ₓ
   (wherein X is an integer of 1 or above)
   wherein the rubber composition contains 0.1 to 25 parts by mass of the block copolymer (3) with respect to 100 parts by mass of the total amount of the diene rubber (1) and the highly saturated rubber (2);
(II) a crosslinkable rubber composition containing the rubber composition of (I) above and a crosslinking agent; and
(III) a crosslinked article of the crosslinkable rubber composition of (II) above.

As used herein, the term "diene rubber" refers to an elastic polymer composed mainly of conjugated diene compounds, such as butadiene and isoprene. Examples of the diene rubber (1) include natural rubber (NR), polyisoprene rubber (IR), polybutadiene rubber (BR) and styrene/butadiene copolymer rubber (SBR).

As used herein, the term "highly saturated rubber" refers to an elastic polymer that is composed mainly of olefin units, such as ethylene, propylene, and isobutylene units, and in which 20% by mass or less of the olefinic carbon-carbon double bonds (unsaturated bonds) units in the backbone of the polymer. Examples of the highly saturated rubber (2) include ethylene/propylene copolymer rubber (EPR), ethylene/propylene/diene copolymer rubber (EPDM), butyl rubber (IIR), chlorinated butyl rubber and brominated butyl rubber.

The block copolymer (3) for use in the present invention is a block copolymer that consists of diene polymer blocks A and hydrogenated diene polymer blocks B and has a primary structure selected from the following structures:
(A-B)ₓ, (A-B)ₓ-A, and B-(A-B)ₓ
wherein X is an integer of 1 or above.

The diene polymer block A, one of the two types of polymer blocks that make up the block copolymer (3), has a high compatibility with the diene rubber (1) and is composed mainly of conjugated diene compounds such as butadiene and isoprene. The diene polymer block A may also contain other compounds that can undergo polymerization, including vinyl aromatic compounds such as styrene. Examples of the diene polymer block A include polyisoprene, polybutadiene, random copolymers of butadiene and isoprene, random copolymers of styrene and butadiene, and random copolymers of styrene and isoprene.

On the other hand, the hydrogenated diene polymer block B shows a high compatibility with the highly saturated rubber (2). The polymer block B is obtained through hydrogenation of a polymer block that consists mainly of conjugated diene compounds such as butadiene and isoprene and may contain other compounds that can undergo polymerization, including vinyl aromatic compounds such as styrene. Examples of the hydrogenated diene polymer block B include hydrogenated polybutadiene, hydrogenated random copolymer of styrene and butadiene, hydrogenated random copolymer of butadiene and isoprene, hydrogenated polyisoprene, and hydrogenated polybutadiene.

To optimize the compatibility, several factors of the block copolymer (3) can be properly selected depending on the respective types of the diene rubber (1) and the highly saturated rubber (2) used. Among such factors are the types of the diene polymer block A and the hydrogenated diene polymer block B, which together form the block copolymer (3); the manner in which the conjugated diene units are linked to one another (*i*.*e.*, 1,4-linkage, 1,2-linkage, or 3,4-linkage); the ratio of each type of conjugated diene unit; and in cases where the polymer blocks contain styrene, the amount of styrene in each polymer block.

For example, when natural rubber (NR) is used as the diene rubber (1), a certain type of polyisoprene, preferably one in which 50% to 99.5% of the entire isoprene units are linked by 1,4-linkages, can be used to serve as the diene polymer block A of the block copolymer (3). Also, when styrene/butadiene copolymer rubber (SBR) is used as the diene rubber (1), a random copolymer of styrene and butadiene can be preferably used to serve as the diene polymer block A in the block copolymer (3).

On the other hand, when an ethylene/propylene/diene copolymer rubber (EPDM) or a butyl rubber (IIR) is used as the highly saturated rubber (2), a certain type of hydrogenated polybutadiene, preferably one resulting from hydrogenation of a polybutadiene in which 10% to 90% of the entire butadiene units are linked by 1,4-linkages, can be used to serve as the hydrogenated diene polymer block B of the block copolymer (3).

To ensure a high compatibility with the highly saturated rubber (2), it is preferred that 20% or less of the entire conjugated diene units that make up the hydrogenated diene polymer blocks B of the block copolymer (3) have olefinic carbon-carbon double bonds (unsaturated bonds) originating from the diene units. Also, to ensure a high compatibility with the diene rubber (1), it is preferred that 50mol% or more of the entire conjugated diene units that make up the diene polymer block A of the block copolymer (3) have olefinic carbon-carbon double bonds (unsaturated bonds) originating from the conjugated diene units. it is more preferred that 70mol% or more of the entire conjugated diene units that make up the diene polymer block A of the block copolymer (3).

While the block copolymer (3) for use in the present invention may be of any number average molecular weight (Mn), it preferably has a number average molecular weight in the range of 10,000 to 1,000,000, and more preferably, in the range of 20,000 to 500,000. The number X in the structural formulae to represent a primary structure of the block copolymer (3) is an integer of 1 or above. The value of X is properly selected depending on the respective number average molecular weights (Mn) of the diene polymer block(s) A and the hydrogenated diene polymer block(s) B, so that each number average molecular weight (Mn) will fall in the preferred range described above. X is typically an integer from 1 to 10, preferably from 1 to 5, and more preferably from 1 to 3. It is also preferred that the block copolymer (3) for use in the present invention has a molecular weight distribution, which is defined as the ratio of the weight average molecular weight (Mw) to the number average molecular weight (Mn), of 1.0 to 1.5. The number average molecular weight and the weight average molecular weight were determined by gel permeation chromatography (GPC) using a polystyrene standard.

The block copolymer (3) for use in the present invention may include hydroxyl, carboxyl, amino, epoxy, or other functional groups at the terminals of the backbone or on the side chains thereof, with the proviso that such functional groups do not affect the advantage of the invention. Furthermore, the block copolymer (3) for use in the present invention may include a moiety originating from a coupling agent, such as 1,2-bromoethane, silicon tetrachloride, and tin tetrachloride, in its molecular backbone.

While the block copolymer (3) may be synthesized by any proper process, it can be produced, for example, by first separately synthesizing a diene polymer block A and a hydrogenated diene polymer block B, each including terminal functional groups, and then allowing these functional groups to undergo a coupling reaction. The block copolymer (3) may be produced by the following process: First, using a known technique, conjugated diene compounds (and, if necessary, vinyl aromatic compounds such as styrene) are anionically polymerized. Upon termination of the anionic polymerization, ethylene oxide is added to synthesize a diene polymer block A having terminal hydroxyl groups. Meanwhile, using a known technique, conjugated diene compounds (and, if necessary, vinyl aromatic compounds such as styrene) are anionically polymerized in a separate reaction. Upon termination of the anionic polymerization, ethylene oxide is added and the resulting polymer is hydrogenated to synthesize a hydrogenated diene polymer block B having terminal hydroxyl groups. Then, with the help of diisocyanate, the diene polymer blocks A and the hydrogenated diene polymer blocks B are coupled with each other to obtain the block copolymer (3). Alternatively, the block copolymer (3) may be produced by sequentially forming a diene polymer block A and a precursor diene polymer block of a hydrogenated diene polymer block B through anionic polymerization and subsequently hydrogenating the resulting polymer. This process will be described in detail later.

When anionic polymerization is employed as a process for obtaining the block copolymer (3), diene polymer block A and precursor diene polymer block of a hydrogenated diene polymer block B are formed one after another. This is done by successively adding corresponding conjugated diene compounds (and, if necessary, vinyl aromatic compounds such as styrene). The anionic polymerization involves the use of a polymerization initiator and is generally carried out at a temperature of -100° C to +100° C over a time period of 0.01 to 200 hours in an atmosphere of inert gas such as dry argon and nitrogen. Examples of the polymerization initiator used for this purpose include alkali metals such as metallic sodium and metallic lithium; and organic alkali metal compounds such as methyllithium, ethyllithium, n-butyllithium and s-butyllithium. In the process, solvents commonly in use in anionic polymerization, such as hexane, cyclohexane, benzene and toluene, can be used. These solvents may be used individually or in combination of two or more.

When it is desired to control the ratio of different types of linkages between conjugated diene units, such as butadiene and isoprene (*i.e.*, 1,2-linkage, 1,4-linkage, and 3,4-linkage) in the diene polymer block A and the precursor diene polymer block of the hydrogenated polymer block B, certain additives may be added prior to, or during, the successive anionic polymerization. Examples of such additives include ethers such as diethyl ether, tetrahydrofuran and ethylene glycol diethyl ether; and amines such as triethylamine and N,N,N',N'-tetramethylethylenediamine.

The diene polymer obtained by the anionic polymerization is then hydrogenated to form a hydrogenated polymer block B and, thus, the block copolymer (3). The hydrogenation process may be based on a known technique and can be carried out by hydrogenating the diene polymer in a solvent inert to hydrogenation, such as hexane and cyclohexane, in the presence of hydrogenation catalysts. Examples of the hydrogenation catalysts include carrier catalysts, such as Pt, Pd, Ru, Rh and Ni carried by carriers such as carbon, alumina, and diatomite; Raney nickel; Ziegler catalysts, in which a transition metal compound is used in combination with an organic aluminum compound or an organic lithium compound; and metallocene catalysts, in which an organic titanium compound is used in combination with an organic aluminum compound or an organic lithium compound.

When it is desired, as described above, to first successively form diene polymer block(s) A and precursor diene polymer block(s) of hydrogenated polymer block B and subsequently hydrogenate the resulting polymer, certain additives, including amines such as triethylamine and N,N,N',N'-tetramethylethylenediamine; and ethers such as diethylether and tetrahydrofuran, may be added so as to allow the hydrogenation of the precursor diene polymer block(s) of hydrogenated diene polymer block B while preventing the diene polymer block(s) A from being hydrogenated.

While the block copolymer (3) for use in the present invention may contain each type of the polymer blocks in any proper amount, it is preferred that, prior to hydrogenation, the diene polymer block A is present in an amount of 20 to 80% by mass (when the block copolymer (3) contains a plurality of diene polymer blocks A, the amount is the total of the blocks) and the hydrogenated diene polymer block B in an amount of 80 to 20% by mass (when the block copolymer (3) contains a plurality of hydrogenated diene polymer blocks B, the amount is the total of the blocks). In this manner, the dispersibility of the rubbers, as well as the adhesion at the interface between the rubber phases, can be improved.

While the hydrogenation process may be carried out at any proper pressure and temperature over any time period, the hydrogen pressure is typically in the range of 0.01 to 20MPa, the reaction temperature is typically in the range of 10 to 250° C, and the reaction time is typically in the range of 0.1 to 200 hours.

Although, after hydrogenation, the block copolymer (3) can be isolated from the resulting reaction mixture by any proper method, it can be isolated, for example, in the following manner: The reaction mixture containing the block copolymer (3) is exposed to a poor solvent such as methanol to precipitate the copolymer (3). The resulting solid was then taken out of the solvent, pre-dried, and then dried either by heating or under reduced pressure.

The rubber composition of the present invention is characterized in that it contains the block copolymer (3) in an amount of 0.1 to 25 parts by mass with respect to 100 parts by mass of the total amount of the diene rubber (1) and the highly saturated rubber (2). Preferably, the amount of the block copolymer (3) is in the range of 0.5 to 20 parts by mass, and more preferably in the range of 1 to 15 parts by mass, with respect to 100 parts by mass of the total amount of the diene rubber (1) and the highly saturated rubber (2). When present in an amount less than 0.1 parts by mass or in an amount greater than 25 parts by mass with respect to 100 parts by mass of the total amount of the diene rubber (1) and the highly saturated rubber (2), the block copolymer (3) exhibits a reduced ability to improve the dispersibility of the rubbers and to improve the adhesion at the interface between the rubber phases.

The rubber composition of the present invention can be prepared by a common kneading process. For example, it can be prepared by kneading predetermined amounts of the diene rubber (1), the highly saturated rubber (2), and the block copolymer (3) in a Brabender mixer, a Banbury mixer, a roll kneader or other kneading apparatuses.

The rubber composition of the present invention may further contain a reinforcing agent such as carbon black and silica, that is commonly used for the purpose of reinforcing rubber compositions, with the proviso that such reinforcing agents do not affect the characteristics of the present formulation.

A description will now be given of the crosslinkable rubber composition of the present invention. The crosslinkable rubber composition may contain any crosslinking agent commonly used for the purpose of crosslinking rubbers. Examples of the crosslinking agent include sulfur-based crosslinking agents such as sulfur, morpholine disulfide and alkylphenol disulfide; and organic peroxide-based crosslinking agents such as cyclohexanone peroxide, methylacetacetate peroxide, *tert-*butylperoxyisobutyrate, *tert*-butylperoxybenzoate, benzoyl peroxide, lauroyl peroxide, dicumyl peroxide, di-*tert*-butyl peroxide and 1,3-bis(*tert*-butylperoxyisopropyl)benzene. Preferably, the amount of the crosslinking agent is in the range of 0.05 to 10 parts by mass, and more preferably in the range of 0.1 to 5 parts by mass, with respect to 100 parts by mass of the total amount of the diene rubber (1), the highly saturated rubber (2) and the block copolymer (3).

If necessary, the crosslinkable rubber composition of the present invention may further contain an accelerator and an activator. The accelerator and the activator may be of any type and may be selected depending on the type of the crosslinking agent used. Examples of the accelerator include thiuram-based promoters such as tetramethylthiuram monosulfide, tetramethylthiuram disulfide and tetraethylthiuram disulfide; thiazole-based promoters such as 2-mercaptobenzothiazole and dibenzothiazyl disulfide; and sulfenamide-based promoters such as N-cyclohexyl-2-benzothiazyl sulfenamide, N-*tert*-butyl-2-benzothiazyl sulfenamide and N-oxydiethylene-2-benzothiazolyl sulfenamide. These accelerators may be used in combination of two or more.

Examples of the activator include metal oxides such as zinc oxide and magnesium oxide; metal hydroxides such as calcium hydroxide; metal carbonates such as zinc carbonate and basic zinc carbonate; fatty acids such as stearic acid and oleic acid; metal salts of fatty acids such as zinc stearate and magnesium stearate; ethylene dimethacrylate, diallylphthalate, N,N-m-phenylenedimaleimide, triallyl isocyanurate and trimethylolpropanetrimethacrylate. These activators may be used in combination of two or more.

The crosslinkable rubber composition of the present invention may further contain various oil, antioxidant, filler, plasticizer, softener and various other agents, with the proviso that these agents do not affect the performance of the crosslinkable rubber composition.

The crosslinkable rubber composition of the present invention can be prepared by a common kneading process. For example, it can be prepared by adding the crosslinking agent, and if necessary, the accelerator and the activator, to predetermined amounts of the diene rubber (1), the highly saturated rubber (2) and the block copolymer (3). The crosslinkable rubber composition can be crosslinked by using a press molder to form a crosslinked article.

One significant advantage of the rubber composition of the present invention is that the rubber components are highly compatible with each other and the adhesion at the interface between the rubber phases has been improved. For this reason, the rubber composition of the present invention exhibits a high tensile property and a high flexing property. Also, the rubber composition of the present invention can retain its characteristics even after crosslinked to form a cured rubber and is therefore suitable for use in tires, belts, rubber hoses and other articles for industrial use.

The present invention will now be described with reference to Examples, which are provided by way of example only and are not intended to limit the scope of the invention in any way.

### Reference Example 1

6.2g of s-butyllithium and 2160g of deaerated and dehydrated cyclohexane were placed in a 5L autoclave with the air inside replaced with nitrogen. The mixture was heated to 50°C, and 545g of isoprene was added. The mixture was then allowed to undergo polymerization for 3 hours. The reaction mixture was sampled and the sample was analyzed by gel permeation chromatography (GPC). The analysis revealed that polyisoprene was generated (number average molecular weight (Mn) = 94800 as determined using polystyrene standard (PSt); the ratio of the weight average molecular weight (Mw) to the number average molecular weight (Mn) (Mw/Mn) = 1.02).

To the reaction mixture obtained above, 13.0g of deaerated and dehydrated tetrahydrofuran was added, and then 545g of butadiene was added, and the mixture was allowed to undergo polymerization at 50°C for 4 hours. 15.5g of methanol was added to the reaction mixture to terminate the polymerization. The resulting mixture was sampled and the sample was analyzed by GPC. The analysis revealed that a polyisoprene-polybutadiene diblock copolymer was generated (Mn = 192500; Mw/Mn = 1.16). The results of ¹H-NMR analysis indicated that the amount of 1,2-linkage in the polybutadiene blocks was 50%.

Some of the resulting mixture was poured into methanol to precipitate the polymer. The solid was collected by filtration and was dried at 80°C for 12 hours. 575g of the resultant polyisoprene-polybutadiene diblock copolymer was dissolved in 2050g of cyclohexane. To this solution, 2.0g of a hydrogenation catalyst, composed of nickel octanoate and triisobutylaluminum, along with 0.37g of N,N,N',N'-tetramethylethylenediamine, was added. The resulting solution was heated to 70°C and, with hydrogen introduced into the system to a pressure of 1MPa, was allowed to react for 5.5 hours. Subsequently, the solution was allowed to cool to room temperature, washed 5 times with 2610g of distilled water, and poured into 23700g of methanol to precipitate the polymer. The solid product was collected by filtration and was dried at 80°C for 12 hours under reduced pressure to obtain 575g of a final product.

Through the analyses by GPC and ¹H-NMR, the resulting product was identified as a diblock copolymer of polyisoprene and hydrogenated polybutadiene (Mn = 192800, Mw/Mn = 1.20) composed of 50% by mass of polyisoprene block and 50% by mass of hydrogenated polybutadiene block (hydrogenated polybutadiene), in which 93% of the carbon-carbon double bonds (unsaturated bonds) in the polybutadiene block were hydrogenated to saturated bonds, while 94% of the carbon-carbon double bonds (unsaturated bonds) in the polyisoprene block remained unhydrogenated (the diblock copolymer is denoted simply as IR-EB (1), hereinafter).

### Reference Example 2

3.0g of s-butyllithium and 2400g of deaerated and dehydrated cyclohexane were placed in a 5L autoclave with the air inside replaced with nitrogen. The mixture was heated to 50° C, and 350g of isoprene was added. The mixture was then allowed to undergo polymerization for 3 hours. The reaction mixture was sampled and the sample was analyzed by gel permeation chromatography (GPC). The analysis revealed that polyisoprene was generated (number average molecular weight (Mn) = 93900 as determined using polystyrene standard (PSt); the ratio of the weight average molecular weight (Mw) to the number average molecular weight (Mn) (Mw/Mn) = 1.02).

To the reaction mixture obtained above, 3.0g of deaerated and dehydrated N,N,N',N'-tetramethylethylenediamine and then 350g of butadiene were added, and the mixture was allowed to undergo polymerization at 50°C for 4 hours. 15.5g of methanol was added to the reaction mixture to terminate the polymerization. The resulting mixture was sampled and the sample was analyzed by GPC. The analysis revealed that a polyisoprene-polybutadiene diblock copolymer was generated (Mn = 177200; Mw/Mn = 1.16). The results of ¹H-NMR analysis indicated that the amount of 1,2-linkage in the polybutadiene blocks was 66%. In the same manner as in Reference Example 1, the reaction mixture was poured into methanol to isolate the polymer, which in turn was hydrogenated, and washed and precipitated to obtain 450g of a final product.

Through the analyses by GPC and ¹H-NMR, the resulting product was identified as a diblock copolymer of polyisoprene and hydrogenated polybutadiene (Mn = 178000, Mw/Mn = 1.20) composed of 50% by mass of polyisoprene block and 50% by mass of hydrogenated polybutadiene block (hydrogenated polybutadiene), in which 95% of the carbon-carbon double bonds (unsaturated bonds) in the polybutadiene block were hydrogenated to saturated bonds, while 84% of the carbon-carbon double bonds (unsaturated bonds) in the polyisoprene block remained unhydrogenated (the diblock copolymer is denoted simply as IR-EB (2), hereinafter).

### Example 1

Natural rubber (NR; RSS #1, ribbed smoked sheet), ethylene-propylene-diene copolymer rubber (EPDM; product name: EPT4045, MITSUI OIL AND GAS Co., Ltd., ethylidenenorbornene type, iodine value = 24), and IR-EB (1) obtained by the process of Reference Example 1 were placed in a Brabender mixer at a ratio (by mass) shown in Table 1 below, and the components were kneaded at 100rpm at 50°C for 5 minutes to form a rubber composition.

The rubber composition so obtained was pressed at 100°C for 1 minute to form a 2mm thick dumbbell-shaped No.5 sample piece. According to JIS K-6251, a tensile test was performed on the sample piece to determine its 100% modulus, breaking strength, and breaking elongation. A section of the rubber piece was cut with a freeze microtome and was dyed with osmium tetroxide (which exclusively dyes natural rubber areas). Using a scanning electron microscope (SEM), the dyed rubber section was observed for how well the rubber components were dispersed and the average size of the dispersed EPDM particles was determined. The results are shown in Table 1 below.

### Comparative Example 1

An IR-EB (1)-free rubber composition, composed only of NR and EPDM, was prepared and was subjected to a tensile test in the same manner as in Example 1. The rubber was observed with SEM. The results are shown in Table 1 below.

**Table 1**

| | | ex. 1 | cf. 1 |
|---|---|---|---|
| Composition (mass parts) | NR¹⁾ | 70 | 70 |
| | EPDM²⁾ | 30 | 30 |
| | IR-EB (1) | 10 | |
| tensile test | 100% modulus (MPa) | 0.09 | 0.08 |
| | breaking strength(MPa) | 0.05 | 0.05 |
| | breaking elongation(%) | 700 | 240 |
| observation with SEM | average size of the dispersed particles (µm) | 0.5 | 1.5 |

| | | | |
|---|---|---|---|
| 1)NR: RSS #1, ribbed smoked sheet 2)EPDM: EPT4045, MITSUI OIL AND GAS Co., Ltd., ethylidenenorbornene type, iodine value = 24 | | | |

The observation with SEM revealed that the average size of the dispersed EPDM particles was 1.5µm in Comparative Example 1, as compared to 0.5pm in Example 1. This implies that the addition of IR-EB (1) makes it possible to significantly reduce the size of the dispersed particles that can be achieved by kneaders that are only capable of generating a relatively small torque and thus have a relatively low ability to mechanically disperse particles.

Also, a comparison of the results of the tensile tests showed that the addition of IR-EB (1) resulted in an increased elongation while giving rise to substantially no decrease in other mechanical properties.

### Example 2

NR (RSS #1, ribbed smoked sheet), EPDM (product name: EPT4045, MITSUI OIL AND GAS Co., Ltd., ethylidenenorbornene type, iodine value = 24), IR-EB (1) obtained by the process of Reference Example 1, carbon black, zinc oxide, and stearic acid were placed in a Banbury mixer at a ratio (by mass) shown in Table 2 below, and the components were kneaded at 100°C for 4 minutes. Using an open roll, sulfur, an accelerator (product name: NOCCELER CZ (N-cyclohexyl-2-benzothiazyl sulfenamide), OUCHI SHINKO CHEMICAL INDUSTRIAL Co., Ltd.), and an antioxidant (product name: NOCRAC 810NA (N-isopropyl-N'-phenyl-p-phenylenediamine), OUCHI SHINKO CHEMICAL INDUSTRIAL Co., Ltd.) were blended with the resulting dough at a ratio shown in Table 2 below. The dough was then pressed at 150°C for 10 minutes to form crosslinks and to form a 2mm thick crosslinked rubber sheet.

According to JIS K-6250, the hardness of the crosslinked rubber sheet was measured with a type A durometer. Meanwhile, a dumbbell-shaped No. 5 sample piece was stamped out from the crosslinked rubber sheet and, according to JIS K-6251, was subjected to a tensile test to determine 100% modulus, 300% modulus, breaking strength, and breaking elongation. Also, sample pieces were made from the crosslinked rubber sheet according to JIS K-6260 and, also according to JIS K-6260, were subjected to the test for crack growth by bending, in which 2mm cuts were made in the recessed center portion of each sample and the sample was repeatedly bent until the cut grew to 8mm in length. The number of times that each sample was bent was counted and average was taken for two sample pieces. Another set of sample pieces were prepared from the crosslinked rubber sheet according to JIS K-6260 and were subjected to the test for crack formation by bending: After bent 80000 times, each sample was evaluated for the surface condition and was graded based on the JIS grading standard (Grade 2: (a) 11 or more "pin holes" were observed, or (b) only 10 or less "pin holes" were observed but 1 or more cracks, each less than 0.5mm long, were found (cracks are larger features than pin holes); Grade 3: if only one pin hole is not formed, at least one crack is 0.5mm or more and less than 1.0mm in length). The results of the hardness test, the tensile test, the test for crack growth by bending, and the test for crack formation by bending were together shown in Table 2 below.

### Comparative Example 2

A crosslinked rubber sheet was obtained in the same manner as in Example 2, except that IR-EB (1) was not added. The crosslinked rubber sheet was subjected to the hardness test, the tensile test, the test for crack growth by bending, and the test for crack formation by bending and the results were together shown in Table 2 below.

**Table 2**

| | | ex. 2 | cf. 2 |
|---|---|---|---|
| Composition (mass parts) | NR¹⁾ | 70 | 70 |
| | EPDM²⁾ | 30 | 30 |
| | IR-EB (1) | 10 | |
| | carbon black HAF³⁾ | 50 | 50 |
| | zinc oxide | 5 | 5 |
| | stearic acid | 3 | 3 |
| | sulfur | 2 | 2 |
| | NOCRAC 810NA⁴⁾ | 1 | 1 |
| | NOCCELER CZ⁵⁾ | 1.5 | 1.5 |
| tensile test | 100% modulus(MPa) | 3.6 | 4.0 |
| | 300% modulus(MPa) | 14.5 | 16.4 |
| | breaking strength(MPa) | 17.4 | 18.0 |
| | breaking elongation(%) | 370 | 340 |
| hardness(JIS A) | | 71 | 72 |
| test for crack growth by bending | number of times by bending | >100000 | 2500 |
| test for crack formation by bending | surface condition of sample piece after bent 80000 times | Grade 2 | Grade 3 |

| | | | |
|---|---|---|---|
| 1)NR: RSS #1, ribbed smoked sheet 2)EPDM: EPT4045, MITSUI OIL AND GAS Co., Ltd., ethylidenenorbornene type, iodine value = 24 3)filler 4)antioxidant (N-isopropyl-N'-phenyl-p-phenylenediamine), OUCHI SHINKO CHEMICAL INDUSTRIAL Co., Ltd. 5)accelerator (N-cyclohexyl-2-benzothiazyl sulfenamide), OUCHI SHINKO CHEMICAL INDUSTRIAL Co., Ltd.) | | | |

By referring to the results of Table 2 and comparing physical properties of the crosslinked rubber of Example 2 with those of the crosslinked rubber of Comparative Example 2, it can be seen that the crosslinked rubber of Example 2 showed significantly higher performance than the rubber of Comparative Example 2 in both of the crack growth test and the crack formation test, although the two rubbers had substantially the same mechanical properties and hardness.

### Example 3 and 4

Natural rubber (NR; RSS #3, ribbed smoked sheet) and butyl rubber (product name: EXXPRO 3745, EXXON CHEMICAL, a brominated product of p-methylstyrene copolymer of butyl rubber) were placed in a Brabender mixer along with IR-EB (1) or IR-EB (2), which were obtained by the processes of Reference Examples 1 and 2, respectively, at respective ratios (by mass) shown in Table 3 below, and the components were in each case kneaded at 100rpm at 50° C for 5 minutes to form a rubber composition.

In each case, a section of the rubber piece was cut with a freeze microtome and was dyed with osmium tetroxide (which exclusively dyes natural rubber areas). Using a scanning electron microscope (SEM), the dyed rubber section was observed for how well the rubber components were dispersed and the average size of the dispersed EPDM particles was determined. The results are shown in Table 3 below.

### Comparative Example 3

A rubber composition composed only of NR and butyl rubber was prepared and was observed with SEM in the same manner as in Examples 3 and 4. The results are shown in Table 3 below.

The observation with SEM revealed that the average size of the dispersed butyl rubber particles was 1.0µm in Comparative Example 3, as compared to 0.3µm in Example 3 and 0.2µm in Example 4. This implies that the addition of IR-EB (1) or IR-EB (2) makes it possible to significantly reduce the size of the dispersed particles.

**Table 3**

| | | ex. 3 | ex. 4 | cf. 3 |
|---|---|---|---|---|
| Composition (mass parts) | NR¹⁾ | 63 | 63 | 70 |
| | butyl rubber²⁾ | 27 | 27 | 30 |
| | IR-EB (1) | 10 | | |
| | IR-EB (2) | | 10 | |
| observation with SEM | average size of the dispersed particles (µm) | 0.3 | 0.2 | 1.0 |

| | | | | |
|---|---|---|---|---|
| 1)NR: RSS #3, ribbed smoked sheet 2)butyl rubber: EXXPRO 3745, EXXON CHEMICAL | | | | |

### Examples 5 and 6

NR (RSS #3, ribbed smoked sheet) and butyl rubber (product name: EXXPRO 3745, EXXON CHEMICAL, a brominated product of p-methylstyrene copolymer of butyl rubber), carbon black, zinc oxide, and stearic acid were placed in a Banbury mixer along with IR-EB (1) or IR-EB (2), obtained by the process of Reference Examples 1 and 2, respectively, at respective ratios shown in Table 4 below, and the components were in each case kneaded at 75° C for 5 minutes. In each case, using an open roll, sulfur, an accelerator (product name: NOCCELER NS (N-tert-butyl-2-benzothiazyl sulfenamide), OUCHI SHINKO CHEMICAL INDUSTRIAL Co., Ltd.), and an antioxidant (product name: NOCRAC 6C (N-phenyl-N'-(1,3-dimethylbutyl)-p-phenylenediamine), OUCHI SHINKO CHEMICAL INDUSTRIAL Co., Ltd.) were blended with the resulting dough at a ratio (by mass) shown in Table 4 below. The dough was then pressed at 150° C for 15 minutes to form crosslinks and to form a 2mm thick crosslinked rubber sheet.

In the same manner as in Example 2, each of the crosslinked rubber sheets was measured for hardness and was subjected to the tensile test and the test for crack growth by bending. A set of sample pieces were prepared from each the crosslinked rubber sheet according to JIS K-6260 and were subjected to the test for crack formation by bending: Each sample was repeatedly bent until the rubber surface reached Grade 3 of the JIS grading standard (Grade 3: if only one pin hole is not formed, at least one crack is formed that is 0.5mm or more and less than 1.0mm in length). The number of times the sample was bent was counted and average was taken for two sample pieces. The results of the hardness test, the tensile test, the test for crack growth by bending, and the test for crack formation by bending were together shown in Table 4 below.

### Comparative Example 4

A crosslinked rubber sheet was obtained in the same manner as in Example 5 and 6, except that neither IR-EB (1) nor IR-EB (2) was added. The crosslinked rubber sheet was subjected, in the same manner as in Examples 5 and 6, to the hardness test, the tensile test, the test for crack growth by bending, and the test for crack formation by bending, and the results were together shown in Table 4 below.

By referring to the results of Table 4 and comparing physical properties of the crosslinked rubbers of Examples 5 and 6 with those of the crosslinked rubber of Comparative Example 4, it can be seen that the crosslinked rubbers of Examples 5 and 6 each showed significantly higher performance than the rubber of Comparative Example 4 in both of the crack growth test and the crack formation test, although the rubbers had substantially the same mechanical properties and hardness.

**Table 4**

| | | ex. 5 | ex. 6 | cf. 4 |
|---|---|---|---|---|
| Composition (mass parts) | NR¹⁾ | 63 | 63 | 70 |
| | butyl rubber²⁾ | 27 | 27 | 30 |
| | IR-EB (1) | 10 | | |
| | IR-EB (2) | | 10 | |
| | carbon black HAF³⁾ | 50 | 50 | 50 |
| | zinc oxide | 3 | 3 | 3 |
| | stearic acid | 2 | 2 | 2 |
| | sulfur | 2 | 2 | 2 |
| | NOCRAC 6C⁴⁾ | 2 | 2 | 2 |
| | NOCCELER NS⁵⁾ | 1.5 | 1.5 | 1.5 |
| tensile test | 100% modulus (MPa) | 4.1 | 4.1 | 4.1 |
| | 300% modulus (MPa) | 17.8 | 18.0 | 18.0 |
| | breaking strength(MPa) | 19.5 | 19.4 | 19.5 |
| | breaking elongation(%) | 380 | 390 | 380 |
| hardness(JIS A) | | 70 | 70 | 69 |
| test for crack growth by bending | number of times by bending | 8,000 | 10,000 | 2,000 |
| test for crack formation by bending | number of times by bending | 82,000 | 79,000 | 30,000 |

| | | | | |
|---|---|---|---|---|
| 1)NR: RSS #3, ribbed smoked sheet 2)butyl rubber: EXXPRO 3745, EXXON CHEMICAL 3)filler 4)antioxidant (N-phenyl-N'-(1,3-dimethylbutyl)-p-phenylenediamine), OUCHI SHINKO CHEMICAL INDUSTRIAL Co., Ltd. 5)accelerator (N-tert-butyl-2-benzothiazyl sulfenamide), OUCHI SHINKO CHEMICAL INDUSTRIAL Co., Ltd.) | | | | |

The present invention makes it possible to obtain a rubber composition, a crosslinkable rubber composition, and a crosslinked product thereof (a crosslinked article) in which the compatibility, and thus, the dispersibility between their rubber components, *i.e.*, diene rubber and highly saturated rubber, has been improved, as has the adhesion at the interface between the rubber phases. Such a rubber composition, a crosslinkable rubber composition, or a crosslinked product thereof exhibits high tensile property as well as high flexing property.

## Claims

1. A rubber composition comprising (1) a diene rubber which is an elastic polymer composed mainly of conjugated diene compounds, (2) a highly saturated rubber which is an elastic polymer that is composed mainly of olefin units, and in which the content of the olefinic carbon-carbon double bond units in the backbone of the polymer is 20% by mass or less, and (3) a block copolymer that comprises a diene polymer block A which is composed mainly of conjugated diene compounds and a hydrogenated diene polymer block B which is obtained through hydrogenation of a polymer block that consists mainly of conjugated diene compounds and has a primary structure selected from the following structures:
(A-B)_{x,} (A-B)ₓ-A, and B-(A-B)ₓ
(wherein x is an integer of 1 or above)
wherein the rubber composition contains 0.1 to 25 parts by mass of the block copolymer (3) with respect to 100 parts by mass of the total amount of the diene rubber (1) and the highly saturated rubber (2).

2. A crosslinkable rubber composition comprising the rubber composition of claim 1 and a crosslinking agent.

3. A crosslinked article obtained by crosslinking the crosslinkable rubber composition of claim 2.

## Patentansprüche

1. Kautschukzusammensetzung, umfassend (1) einen Dien-Kautschuk, der ein elastisches Polymer, vorwiegend zusammengesetzt aus konjugiertes-Dien-Verbindungen, ist, (2) einen hochgradig gesättigten Kautschuk, der ein elastisches Polymer ist, das vorwiegend aus Olefineinheiten zusammengesetzt ist, und in dem der Gehalt an den olefinischen Kohlenstoff-Kohlenstoff-Doppelbindungseinheiten in der Hauptkette von dem Polymer 20 Massenprozent oder weniger ist, und (3) ein Blockcopolymer, umfassend einen Dien-Polymerblock A, vorwiegend zusammengesetzt aus konjugiertes-Dien-Verbindungen, und einen hydriertes-Dien-Polymerblock B, erhalten durch Hydrierung von einem Polymerblock, der vorwiegend aus konjugiertes-Dien-Verbindungen besteht, und welches eine Primärstruktur aufweist, ausgewählt aus den folgenden Strukturen:
(A-B)x, (A-B)x-A und B-(A-B)x,
(wobei x eine ganze Zahl von 1 oder darüber ist,)
wobei die Kautschukzusammensetzung 0,1 bis 25 Massenteile von dem Blockcopolymer (3), bezogen auf 100 Massenteile von der Gesamtmenge von dem Dien-Kautschuk (1) und dem hochgradig gesättigten Kautschuk (2), enthält.

2. Vernetzbare Kautschukzusammensetzung, umfassend die Kautschukzusammensetzung nach Anspruch 1 und ein Vernetzungsmittel.

3. Vernetzter Gegenstand, erhalten durch Vernetzen der vernetzbaren Kautschukzusammensetzung nach Anspruch 2.

## Revendications

1. Composition de caoutchouc, comprenant (1) un caoutchouc diène, qui est un polymère élastique composé principalement de composés diène conjugué, (2) un caoutchouc fortement saturé, qui est un polymère élastique qui est composé principalement d'unités oléfiniques, et dans lequel la teneur en unités à double liaison carbone-carbone oléfinique dans le squelette du polymère est de 20% en masse ou moins, et (3) un copolymère séquencé, qui comprend une séquence polymère diénique A, qui est composée principalement de composés diène conjugué, et une séquence polymère diénique hydrogéné B, qui est obtenue par hydrogénation d'une séquence polymère qui consiste principalement en des composés diène conjugué, et qui a une structure primaire choisie parmi les structures suivantes :
(A-B)ₓ, (A-B)ₓ-A, et B-(A-B)ₓ
(où x est un entier valant 1 ou plus),
où la composition de caoutchouc contient 0,1 à 25 parties en masse du copolymère séquencé (3) par rapport à 100 parties en masse de la quantité totale du caoutchouc diène (1) et du caoutchouc fortement saturé (2).

2. Composition de caoutchouc réticulable, comprenant la composition de caoutchouc selon la revendication 1 et un agent de réticulation.

3. Article réticulé obtenu par réticulation de la composition de caoutchouc réticulable selon la revendication 2.
